# EUROPEAN PATENT SPECIFICATION

(11) **EP 0 782 812 B1**
(45) Date of publication and mention of the grant of the patent: **08.02.2006**
(21) Application number: 95932986.3
(22) Date of filing: 12.09.1995
(51) Int. Cl.: H04Q 3/545, G06F 9/46

(54) **A FLEXIBLE CALL RECORD MECHANISM**
FLEXIBLER ANRUFREGISTRIERUNGSMECHANISMUS
MECANISME D'ENREGISTREMENT D'APPELS FLEXIBLE

(30) Priority: 19.09.1994 SE 9403131
(43) Date of publication of application: 09.07.1997
(73) Proprietor: TELEFONAKTIEBOLAGET LM ERICSSON (publ), 164 83 Stockholm (SE)
(72) Inventor: KILHAGE, Mikael, Per, Erik, S-655 93 Karlstad (SE); STRAND, Jan, Erik, S-652 22 Karlstad (SE)
(74) Representative: Svanfeldt, Hans-Ake
(86) International application number: PCT/SE1995/001028
(87) International publication number: WO 1996/009730

(56) References cited:
- EP-A- 0 470 415
- EP-A- 0 520 477
- EP-A- 0 524 089
- US-A- 5 218 632

## Description

### TECHNICAL FIELD

The present invention refers to a record mechanism in a telecommunication system and particularly to a data structure enabling easy recording of necessary data in a traffic controlling process for a telecommunication application.

### BACKGROUND OF THE INVENTION

During processing of a call in a telecommunication system a large amount of data needs to be handled or collected. Such call related data differs a lot between calls depending on what kind of services are utilized in the specific call, which protocols are used to communicate with the surrounding networks etc. Data contains information useful for different kinds of users of the telecommunication system. One network/service provider may want to create billing records while another wants to create statistics of different kinds. As the vendor wants to be independent of which data the user wants to use and still be able to add new data together with a new service without having to change already existing software, this call related data record have to be handled in a new efficient way.

There exist a number of possible solutions to handle the call related data. One obvious way is to use a conventional database to collect the information, which quickly renders into capacity problems. Another solution is choose a declarative solution where a declaration of the contents is made (e.g. compare a record in Pascal). The drawback of a declarative solution as a Pascal record is that it does not present the desired flexibility. Yet another approach is to send around the data between the objects whenever it is needed, which creates duplication of data.

In the state of the art there are found several concepts regarding object oriented software structures for processing in a modern telecommunication system. EP-0 524 089 A1 titled "Structure de logiciel pour système de traitement de données, notamment pour système de télécommunications" describes a logical structure system for processing data, specifically for telecommunication systems. The structure particularly simplifies the real time communication between the objects according to the CCITT rules X 200. EP-0 524 077 A1 titled "Structure de logiciel pour système de traitement d'informations" describe a structure which hides the hardware and software system features to the application programs.

EP-0 470 415 A2 describes a method to supply a number of application processors in a telephony system access to call related information in a common database. The information is tagged and stored temporarily as a record in the database as long as the communication lasts. The information is particularly directed for being directly viewed on a display terminal for supervision in an operator controlled switching system.

U.S. Patent US-A-5218632 discloses a billing record software system used to decide whether or not a billing record should be generated for a call.

### SUMMARY OF THE INVENTION

Therefore there is a demand in a telecommunication system, to create call record mechanism, which makes it possible to extend said system with new services and data without effecting an already existing operating software of a system using the half-call principle.

A first object according to the present invention is, in a session of executing call processing, to perform the locally temporary storing of data by means of memory pointers in records associated with each executed session, the pointer being further combined with a tag element by means of which locally stored data will be uniquely identified and may during the duration of a session selectively be called by a record view object function and stored in a data base for subsequent processing.

A second object according to the present invention is that the specific session is using a session record and a transaction record for storing pointers and tags of objects and data, respectively, in the session and from which records it will be possible to locate all objects and data within the session, if the tag element is known under which the desired data information is stored.

A third object according to the present invention is that in the call processing is defined a traffic case scope having a similar structure as a session scope and a traffic case record is created and referenced from said sesson to store executing objects of a call and additionally in the traffic case record there is a transaction record storing data belonging to said traffic case.

A fourth object according to the present invention is that services may be changed at any moment by simple modification of a tag-list stored in a local database without interfering with the existing operating overhead system.

A fifth object according to the present invention is that the tag element is being realized by an integer number, preferably as a binary word, uniquely assigned to each executing object or data object used in a session.

These objects are achieved according to the appended claims 1-8.

### BRIEF DESCRIPTION OF THE DRAWINGS

The invention, together with further objects and advantages thereof, may best be understood by making reference to the following description taken together with the accompanying drawings, in which:
- Figure 1: is an illustration of a session having a session controller, SC, handling several traffic cases including for each traffic case a respective originating call, OC, in communication with other traffic cases including a respective terminating call, TC;
- Figure 2: demonstrates a session controller, SC, using, according to the method and system of the present invention, a session record to store references to executing objects, and a transaction record to store references to data objects;
- Figure 3: demonstrates collections according to the method and system of the present invention to store a traffic case object within an originating call, OC;
- Figure 4: is an demonstration of objects controlling the data flow in a session;
- Figure 5: demonstrates an example when data for a charging basis is extracted from a session;
- Figure 6: shows in a simple example the relation between created managed objects;
- Figure 7: shows the complete static view according to the simple example of Fig. 6;
- Figure 8: is a simple flow chart of call data collection in a Transaction Record during call processing; and
- Figure 9: is a simple flow chart of specification of data to include in an output.

### FUNDAMENTALS

To be able to handle the subject of the present application in an efficient way it will be practical to first define a number of technical terms which will be useful throughout the following description.

A common way to structure software in a call processing switching system for telephony is to divide the control of the call into two halves, a Half-Call A and a Half-Call B. The software which controls a Half-Call is executing in a process called a Session. A session can handle one or several Traffic Cases simultaneously (for example in a multi call situation). The Traffic Case defines the functionality and data that handles a call in a Session. Note also that a three party call is handled by two Traffic Cases in a Session, one for each call leg.

For the sake of simplicity the session is structured in different scopes and therefore is introduced the Session Scope and the Traffic Case Scope. The Session Scope is controlled by the Baseflow Session Controller, SC. The main task for the session controller is to act as a command interpreter against the Access Protocol, ACP and make a service analysis on these commands (Messages). This includes then, for instance, initiating and terminating new Traffic Cases, distributing information from the Access Protocol to the correct Traffic Case, initiating new services, etc.

Every Traffic Case within the Session is controlled by one baseflow. Such a baseflow may be either an Originating Call, OC or a Terminating Call, TC. The main task for this baseflow is to take care of the basic call handling. This includes for example establishing/disconnecting a call (including handling of the Telecommunication Service Protocol, TSP, between the call halves), ordering establishment/disconnection of connections (for example a speech connection), and ordering address information analysis, etc.

To support the different scopes and the control logic operating within those, there is a need of a similar data structure. Thus the data must be structured in a certain way to make it possible to implement and maintain the applications. Correspondingly there exists two different types of objects, which in this description are denoted Executing Objects and Data Objects.

An Executing Object will execute in the session, e. g., control objects, protocol objects, resource objects etc. A pure Data Object will contain data received for example from a Teleservice Protocol Message. It shall also be possible to make an output of this type of data for charging or statistic purposes. The two types of Objects have different semantics and are stored in different records in the Session. Such a record is referred to as a Session Record and is used to store pointers to protocol objects and resource objects instantiated by control and resource objects within the Session. The Objects stored in a Session Record are common for the whole Session. For storing references to pure Data Objects is used a Transaction Record. In a similar way as the Session Record stores pointers to objects the Transaction Record (also named call record) is used to store pointers to pure Data Objects instantiated by control, protocol, and resource objects within the Session or a Traffic Case executing in the Session.

A users view of a Session Record is referred to a Session Record View and gives the user an interface to the Session Record on a high abstraction level. Similarly a users view of a Transaction Record is referred to as the Transaction Record View and gives the user an interface to the Transaction Record on a high abstraction level.

Finally there is also found a Traffic Case Record which is a record where pointers to Objects belonging to a Traffic Case are stored. Only pointers to Protocol Objects and Resource Objects are stored in this record. For storing pure Data Objects a Transaction Record should be used. A users view of a Traffic Case Record is referred to a Traffic Case Record View and gives the user an interface to the Session Record on a high abstraction level.

### DETAILED DESCRIPTION OF THE PREFERRED EMBODIMENT

To support the different scopes and corresponding control logic for a call record mechanism in a telecommunication system we need a suitable data structure. Data must be structured to make it possible to implement and maintain the applications. We therefore introduce two different types of objects, the executing objects and data objects, respectively, to keep track in an session. These two terms, which were already defined above, do have different semantics and are stored in different records in the created session. When storing an object in a collection it is only a question of storing a pointer to the object that is to be stored and consequently no duplication of the object itself is made in such a step. This also implies that for such a pointer storage there is actually no need to know the size of the particular object.

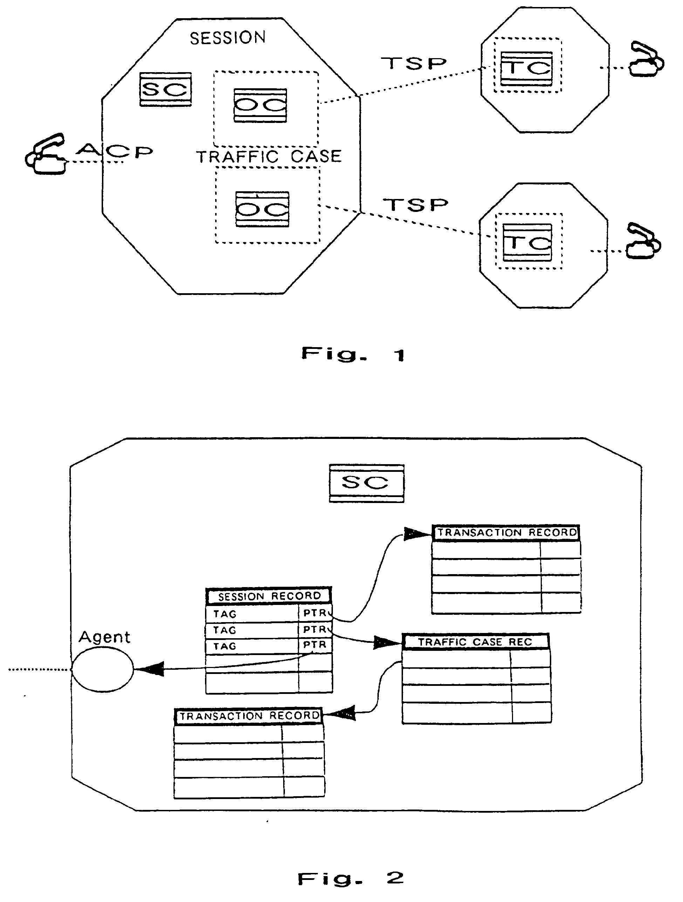

Figure 1 is a generalized view of a session scope, which is controlled by the session controller SC. The session controller is acting as a command interpreter against the access protocol ACP, which is the generic term used for the subscriber or network accesses. As is evident from figure 1, the session contains one or several traffic cases, and here the particular session contains two traffic cases which are both of the OC type (originating call). Each one of the two traffic cases of type OC is established by means of the respective traffic case to another traffic case of type TC (terminating call) through a handling telecommunication service protocol, TSP.

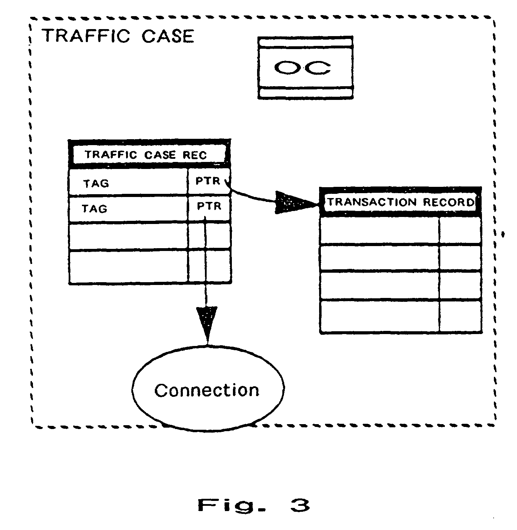

As indicated in figure 2 there is in the session scope a session record, SR, which shall be used for storing a pointer, PTR, to each executing object, for example to a so called session agent. The session record is by means of other pointers the root for the data structure in each session. The data objects of the whole session is found in the transaction record by means of their respective pointers, PTR. Each entry in the session record is having a particular name or key, TAG, which makes it possible to locate any object within the session scope if the particular system operator knows the particular name or TAG.

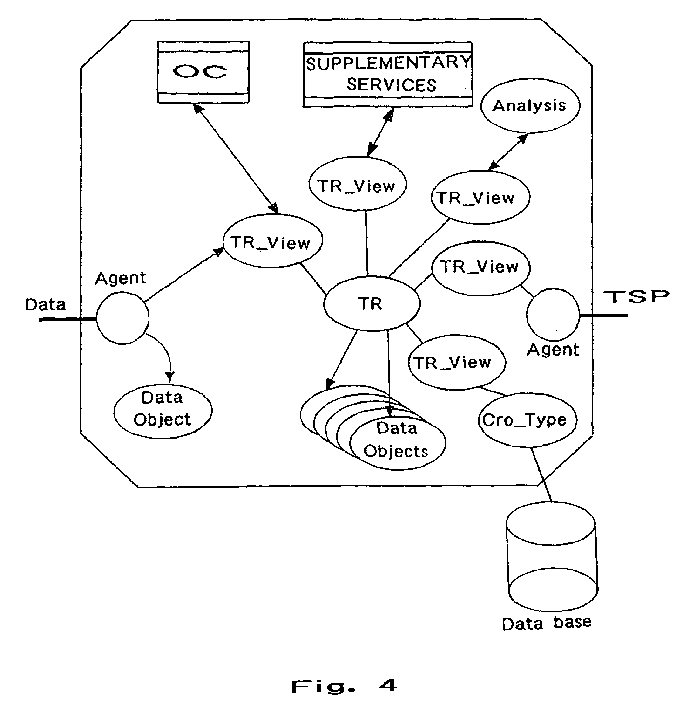

Figure 3 is a generalized view of a traffic case scope, here containing an originating call type, OC, but a terminating call type, TC, would have the corresponding structure. This scope has to be introduced if the application has a need to execute an arbitrary number of parallel traffic cases in the session. The structure of the traffic case scope is thus similar to that of the session scope. For each traffic case in a session there is created a traffic case record to store executing objects. Like in the session record is used a name or TAG and a pointer PTR. The traffic case record is accordingly referenced from the session record. To store data objects belonging to the traffic case is consequently used a transaction record, TR, creating a table for the data objects at this traffic case level.

Every user of a session or traffic case record has an own view object through which the stored executing objects or data objects may be accessed.

Figure 4 demonstrates in greater detail the data flow through a session executing an originating call, OC. The data flow starts when some data is received by an access agent or the input agent. The received data is converted to an AXE internal representation. The converted data is then stored in the transaction record, TR. The data object is stored with a tag. The tag is an integer that is reserved for this particular data object. Other users, e.g. an Application Analysis, needing the data object can fetch it from the transaction record by means of the tag and by utilizing a transaction record view object, TR_View. The above example also illustrates when data is sent by the output agent to the other Half-Call via the telecommunication service protocol, TSP. Data is sent in a parameter which besides the data contains the tag which identifies it.

As stated above a data object is stored in the transaction record (a synonym for transaction record is also call record). The transaction record, TR, is as already stated always accessed via a view object. The view object gives the user a high level interface to TR, which will be further described below. Each data object that is stored in the transaction record is semantically identified by a name or key referred to as the TAG. The TAG is an integer, in an exemplifying embodiment a 16 bit word, which has been reserved for one particular data object. By using a dynamic storage such as the transaction record, where the data objects are stored with tags it will be possible to support a very flexible output mechanism. In other words it will be extremely easy, without influencing the general operation of the telecommunication system, to at any particular time period extract any chosen data objects on demand of the user for a later analysis. A consequence of this is that it will be extremely easy to add additional services into a system operating according to such a structured way of operation.

Assume that the agent receive the parameter "calling party number" on the protocol, ACP. The data will be converted to an AXE internal representation and stored in the TR together with an dedicated tag, "AppCallingPartyNumberTag". Other users of TR that needs the calling party number can then turn to the TR and ask for the data object that is stored with the TAG "AppCallingPartyNumberTag". An interface Application Platform Tags Interface, ATI, contains the number of tags used by the functions. ATI also contains the rules to follow when new tags are reserved.

As already mentioned the TR is always accessed via a view object. The view object has two main tasks. The first is to present a customized interface towards the TR. Each user of the TR should have a dedicated interface to the contents in the TR. The second task is to act as a handle object towards the TR, the handle ensures that TR is not removed until all handles are deleted.

View objects are also used to access the contents of the other two types of record that exist, the session record and the traffic case record. As mentioned above one task of the view object is to provide the user with a customized interface on a high abstraction level towards a record. The customizing means that the interface gives the users access only to the objects needed to be accessed, which may be only a part of the total contents in a record.

The second major task of the view objects towards the transaction record and the traffic case record is that they act a handles. As long as a record has a handle it can not be deleted. When the last handle towards a record is removed the record and all its content is also removed from the local memory storage. It is apparent that this creates a very convenient local memory storage management.

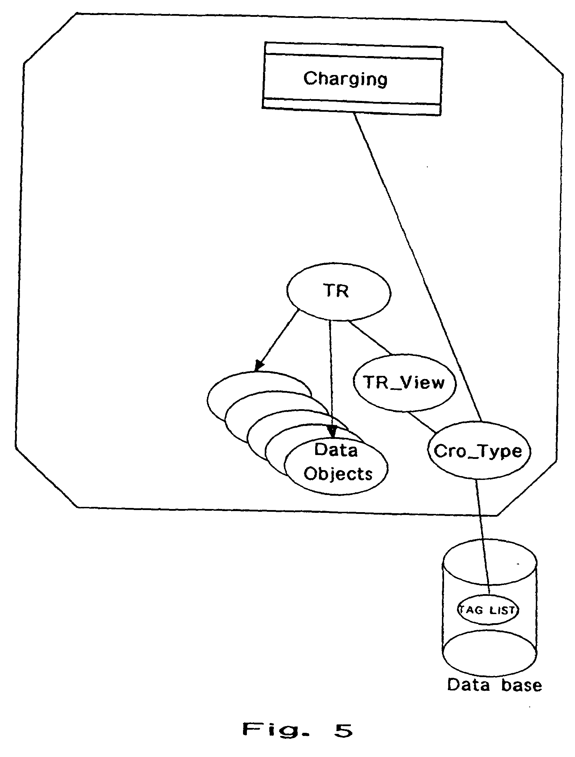

The call record output mechanism already mentioned is used to output parts of the content of a transaction record for post-processing. It should be kept in mind that the contents of the session record and a traffic case record and a transaction record are existent only during the duration of that particular session and will disappear when the session is terminated. The output mechanism is built around a number of managed objects containing tag lists. In the operation of a telecommunication system there is for instance a need to collect charging data to be able to correctly bill the different subscribers. In Figure 5 is exemplified what may take place in a session. A control object "Charging" has opened an object Cro_Type. This particular Cro_Type object contains a Tag list, fetched from the data base, denoting the data objects to be extracted from the transaction record. Cro_Type is then ordered to compile a report consisting of the data objects identified by the tag list which is stored in the data base. The control object then uses the Cro_Type interface to order it to collect the data during the existence of the particular session. The data may be packed in a data area which then will be sent to a post-processing node. Consequently a charging basis due to increased services may be changed at any moment by simple modification of the tag list without interfering at all with the existing system having a structure according to the present invention.

The effective result of this is that even if the contents of the different sessions are defined as local data, it is possible to simultaneously make use of desired parts of the content as if it constitutes global data. A difference between local and global data is for example that the latter by necessity has normally to be allocated in predetermined memory locations to be able to be accessed by other users.

In the illustrative embodiment we use three types of managed objects to effectuate the flexible output mechanism described here. They are denoted as CroServiceTemplate, CroType and CroCustomerTemplate. The first managed object type, the CroServiceTemplate is used for specification of what data objects are possible to extract for a specific basic or supplementary service. CroServiceTemplate contains one attribute, possible TAGs, denoting which data is possible to extract from the transaction record, TR, for a particular service, for example in this context a "Basic Call" or a "Three Party Call".

The second managed object type is CroType, which is used for specification of a certain output type. Every instance of CroType is connected to one or more instances of CroServiceTemplate. The union of data in these CroServiceTemplates determines what data is possible to output for a specific CroType.

The third and last management object type is CroCustomerTemplate, which is a managed object holding the information of which data to extract for a specific customer from in a specific output type, CroType.

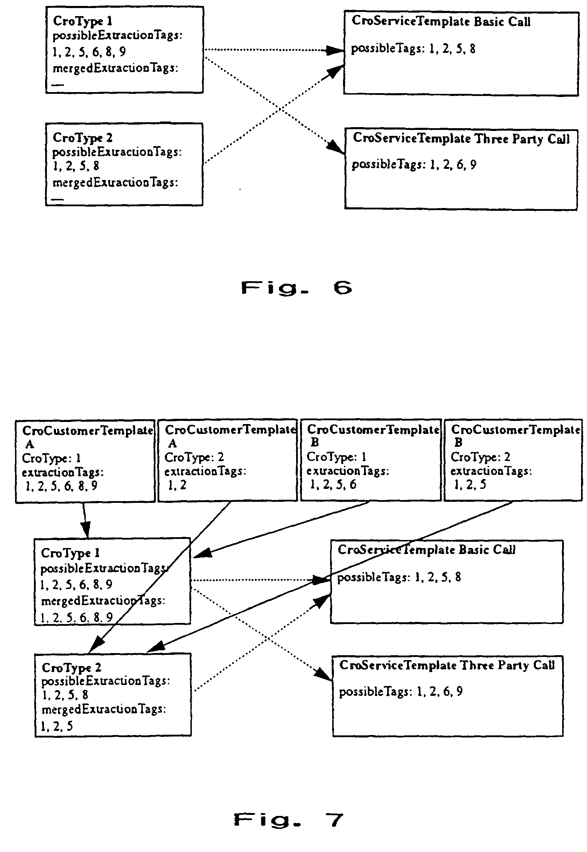

Figure 6 demonstrates a small example having the conditions:
- There are two customers, A and B.
- There are two services, "Basic Call" and "Three Party Call".
- There are two CroTypes, CroType 1 and CroType 2.

Because there are two services we need two CroServiceTemplates:
- CroServiceTemplate Basic Call, containing the Tags 1, 2, 5 and 8.
- CroServiceTemplate Three Party Call, containing the Tags 1, 2, 6 and 9.

This means that for the "Basic Call" we can output the data stored in TR having the Tags 1, 2, 5, and 8, while for the service "Three Party Call" we may output the data stored under the Tags 1, 2, 6, and 9.

We then define two output types, CroType 1 designed such that it will be able to output data related to both services and CroType 2 designed such that it will be able to output data related to the Basic Call. In Figure 6 is visualized the basic structure and the relation between the created managed object.

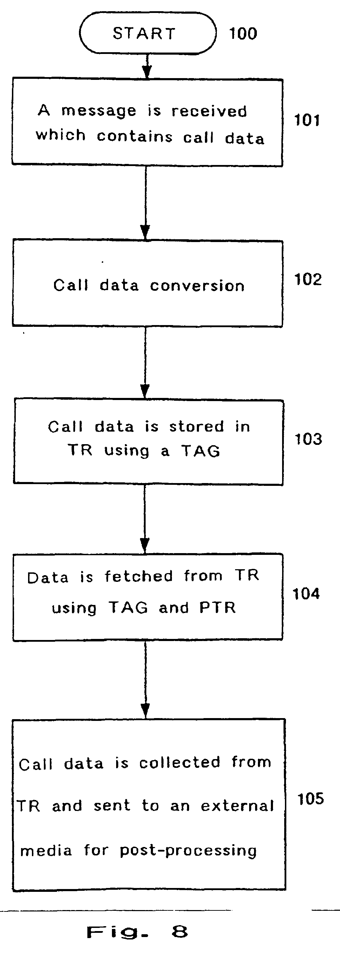

One CroCustomerTemplate is required for each customer and CroType to make the output mechanism "Call Record Output", CRO, able to perform outputs of all CroTypes to all customers. This results in this example in a total of four CroCustomerTemplates. In Figure 7 is demonstrated the resulting structure. Customer A requires all possible Tags from CroType 1 and Tag no. 1 and 2 from CroType 2 and customer B requires all Tags with lower number than 8 from all CroTypes. We then have a final structure that the output mechanism CRO needs to make a proper distribution. We have specified which data fields all different customers need from all different CroTypes.

A final part of the data flow in Figure 4 describes when the data shall be sent to the other Half-Call. The Half-Calls communicate by means of the Telecommunication Service Protocol, TSP. The TSP carries self-identifying parameters. A parameter contains a data object and is identified by a Tag. The receiver can determine what data is received by looking at the Tag. The Tag which is used to identify a parameter on the TSP is the same Tag used to identify a data stored in TR.

In Figure 8 is summarized by a number of steps in a simple flow chart of a call data collection in a Transaction Record during call processing. Such a processing is started in a step 100. In the first real step 101 of the process a message is received over an external protocol. It is received in a protocol agent within a dynamic process within the system. Next in a step 102 the data is converted from an externa representation to an internal representation. A Data Object is created within the process. This Data Object then contains the internal representation of the received data.

In a third step 103 the Data Object is stored under a unique tag element in a transaction record. During call processing data is fetched in a fourth step 104 from the transaction record using a transaction record view object then utilizing the tag element to get the correct pointer PTR to retrieve the specified data.

When the call ends or when an output of call data is wanted for statistical or charging purposes the function call record output is called in a fifth step 105. This function accesses the database to find out which data to output. As a result the function gets a list of tag elements. The wanted data is collected from TR in step 104 and put into an output buffer. This buffer may then be output to an external media. The data may later be post-processed in order to for instance produce billing information etc.

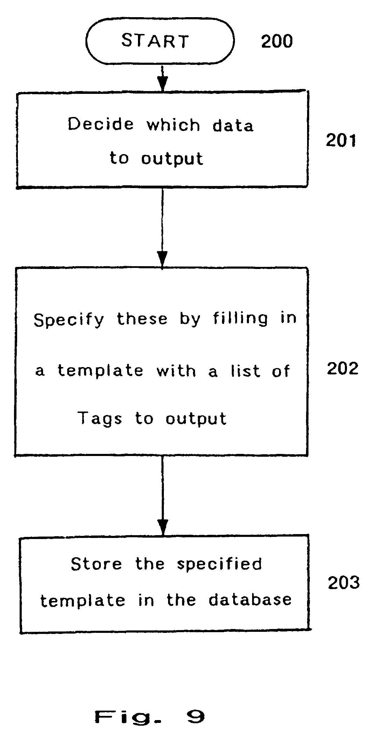

Finally in Figure 9 is shown by means of three steps a simple flow chart a specification of data to be included in an output. The procedure starts in a step 200. In a step 201 the service provider or any other operator administrating the system decides which data to output for different call types. These different output types are specified in a second step 202 by filling in templates with lists of tags to output. In a final step 203 these templates are stored in the database by for example entering the list of tags by means of a separate terminal and/or a keyboard. These entered list of tags are later accessed during the call processing. Entering of the list of tags will not interfere with the general call processing in the telecommunication system for initiating and terminating traffic cases, distributing information from the access protocol to the correct traffic case, initiating new services, etc., but when entered it will decide which data to be stored in the database for post-processing.

It will be understood by those skilled in the art that various modifications and changes may be made to the present invention without departure from the scope thereof, which is defined by the appended claims.

## Claims

1. A method for a flexible call record mechanism in a telephony or telecommunication system, wherein the control of a call is divided, **characterized in that** at the time of an execution of a session that relates to call processing, the method comprises:
storing data locally and temporarily by means of memory pointers (PTR) in records (SR, TR) which arc associated with each executed session; combining each pointer (PTR) with a tag element (TAG) which uniquely identifies locally stored data;
selectively calling said data from a record view object function, wherein the selection of data is specified by a tag list, which tag list is stored in and supplied from a local database, and said tag list can be modified to allow for addition of new services and/or modification of existing services; and
subsequently storing said selectively called data in an external data base.

2. The method according to claim 1, **characterized in that** the session uses a session record (SR) and a transaction record (TR) for storing pointers (ITR) and tags (TAG) of objects and data, respectively, in said session, said records allowing extraction of selected objects or data by referencing it with its respective tag element.

3. The method according to claim 2, **further comprising** creating a traffic case record for storing of executing objects of a call, and referencing said traffic case record from said session record (SR)

4. The method according to claim 3, **characterized in that** a transaction record (TR) stores in said traffic case record data which belongs to said traffic case.

5. The method according to claim 4, **characterized in that** said tag clement (TAG) is realized by an integer number, preferably as a binary word, uniquely assigned to each executing object or data object to be stored.

6. A call record system adapted for use in a telephony or telecommunication system wherein the control of a call is divided, **characterized by** that the call record system comprises means for local and temporary storage of session objects and/or data associated with each executed session and an external database for subsequently storage and post-processing of data associated with each executed session,
wherein the locally and temporarily storage means comprises:
a memory pointer (PTR) for local and temporary storing of session objects or data in records that arc associated with each executed session, said pointer (PTR) being combined with a tag element (TAG) which H uniquely identifies locally stored data;
a tag list which has been supplied from and is stored in a local database; and
a record view object function adapted to by the use of said tag list, selectively call data to be subsequently stored in said external database.

7. The system according to claim 6, **characterized in that** the session uses a session record (SR) and a transaction record (TR) for storing pointers (PTR) and tags (TAG) of objects and data, respectively, in said session, said records allowing extraction of selected objects or data by referencing it with its respective tag element (TAG).

8. The system according to claim 7, **characterized by** a traffic case record adapted to store executing objects of a call.

## Patentansprüche

1. Verfahren für einen flexiblen Anrufaufzeichnungsmechanismus in einem Telefon oder einem Telekommunikationssystem, wobei die Steuerung eines Anrufs aufgeteilt ist, **dadurch gekennzeichnet, dass** zu der Zeit eine Ausführung einer Session, die sich auf eine Anrufverarbeitung bezieht, das Verfahren folgendes aufweist:
lokales und temporäres Speichern von Daten mittels Speicherzeigern (PTR) in Aufzeichnungen (SR, TR), die zu einer jeweiligen ausgeführten Session gehören; Kombinieren jedes Zeigers (PTR) mit einem Tag-Element bzw. Kennungselement (TAG), das lokal gespeicherte Daten eindeutig identifiziert;
selektives Anrufen der Daten von einer Aufzeichnungsansichts-Objektfunktion, wobei die Auswahl von Daten durch eine Tag-Liste bzw. Kennungsliste spezifiziert wird, welche Tag-Liste in einer lokalen Datenbank gespeichert ist und von dieser zugeführt wird, und welche Tag-Liste modifiziert werden kann, um ein Hinzufügen von neuen Diensten und/oder eine Modifikation von existierenden Diensten zuzulassen; und
nachfolgendes Speichern der selektiv angerufenen Daten in einer externen Datenbank.

2. Verfahren nach Anspruch 1, **dadurch gekennzeichnet, dass** die Session eine Sessionaufzeichnung (SR) und eine Transaktionsaufzeichnung (TR) zum Speichern von Zeigern (PTR) und Tags (TAG) von Objekten bzw. Daten in der Session verwendet, wobei die Aufzeichnungen eine Extraktion von ausgewählten Objekten oder Daten durch Bezugnahme auf sie mit ihrem jeweiligen Tag-Element zulassen.

3. Verfahren nach Anspruch 2, das weiterhin folgendes aufweist: Erzeugen einer Verkehrsfall-Aufzeichnung zum Speichern von ausführenden Objekten eines Anrufs und Bezugnehmen auf die Verkehrsfall-Aufzeichnung von der Sessionaufzeichnung (SR).

4. Verfahren nach Anspruch 3, **dadurch gekennzeichnet, dass** eine Transaktionsaufzeichnung (TR) in der Verkehrsfall-Aufzeichnung Daten speichert, die zu dem Verkehrsfall gehören.

5. Verfahren nach Anspruch 4, **dadurch gekennzeichnet, dass** das Tag-Element (TAG) durch eine ganze Zahl, vorzugsweise als Binärwort, realisiert ist, die jedem zu speichernden ausführenden Objekt oder Datenobjekt eindeutig zugeordnet ist.

6. Anrufaufzeichnungssystem, das zur Verwendung in einem Telefon- oder Telekommunikationssystem geeignet ist,
wobei die Steuerung eines Anrufs aufgeteilt ist, **dadurch gekennzeichnet, dass** das Anrufaufzeichnungssystem eine Einrichtung zur lokalen und temporären Speicherung von Sessionobjekten und/oder -daten aufweist, die zu einer jeweiligen ausgeführten Session gehören, und eine externe Datenbank zur nachfolgenden Speicherung und zur Nachverarbeitung von Daten, die zu einer jeweiligen ausgeführten Session gehören,
wobei die Einrichtung zur lokalen und temporären Speicherung folgendes aufweist:
einen Speicherzeiger (PTR) zum lokalen und temporären Speichern von Sessionobjekten oder -daten in Aufzeichnungen, die zu einer jeweiligen ausgeführten Session gehören, wobei der Zeiger (PTR) mit einem Tag-Element bzw. Kennungselement (TAG) kombiniert ist, das lokal gespeicherte Daten eindeutig identifiziert;
eine Tag-Liste bzw. Kennungsliste, die von einer lokalen Datenbank zugeführt worden ist und in dieser gespeichert ist; und
eine Aufzeichnungsansichts-Objektfunktion, die durch die Verwendung der Tag-Liste dazu geeignet ist, Daten sequentiell anzurufen, um nachfolgend in der externen Datenbank gespeichert zu werden.

7. System nach Anspruch 6, **dadurch gekennzeichnet, dass** die Session eine Sessionaufzeichnung (SR) und eine Transaktionsaufzeichnung (TR) zum Speichern von Zeigern (PTR) und Tags (TAG) von Objekten bzw. Daten in der Session verwendet, wobei die Aufzeichnungen eine Extraktion von ausgewählten Objekten oder Daten durch Bezugnahme auf sie mit ihrem jeweiligen Tag-Element (TAG) zulassen.

8. System nach Anspruch 7, **gekennzeichnet durch** eine Verkehrsfall-Aufzeichnung, die zum Speichern von ausführenden Objekten eines Anrufs geeignet ist.

## Revendications

1. Procédé destiné à un mécanisme flexible d'enregistrement d'appel dans un système de téléphonie ou de télécommunication, dans lequel la commande d'un appel est distribuée, **caractérisé en ce que**, au moment de l'exécution d'une session qui intéresse le traitement d'appel, le procédé comprend les étapes consistant à :
stocker des données localement et temporairement à l'aide de pointeurs en mémoire (PTR) sur des enregistrements (SR, TR) qui sont associés à chaque session exécutée ;
combiner chaque pointeur (PTR) avec un élément de balise (TAG) qui identifie de manière univoque des données stockées localement ;
appeler sélectivement lesdites données à partir d'une fonction objet de visualisation d'enregistrement, dans lequel la sélection des données est spécifiée par une liste de balises, laquelle liste de balises est stockée dans une base de données locale et fournie par celle-ci, et ladite liste de balises peut être modifiée afin de permettre l'addition de nouveaux services et/ou la modification de services existants ; et
stocker ensuite lesdites données appelées sélectivement dans une base de données externe.

2. Procédé selon la revendication 1, **caractérisé en ce que** la session utilise un enregistrement de session (SR) et un enregistrement de transaction (TR) pour stocker des pointeurs (PTR) et des balises (TAG) d'objets et de données, respectivement, dans ladite session, lesdits enregistrements permettant d'extraire des objets ou données sélectionnés en les référençant à l'aide de leur élément de balise respectif.

3. Procédé selon la revendication 2, comprenant en outre l'étape consistant à créer un enregistrement de matière de trafic pour stocker des objets d'un appel qui s'exécutent et à référencer ledit enregistrement de matière de trafic à partir dudit enregistrement de session (SR).

4. Procédé selon la revendication 3, **caractérisé en ce qu'**un enregistrement de transaction (TR) stocke dans ledit enregistrement de matière de trafic des données qui appartiennent à ladite unité de trafic.

5. Procédé selon la revendication 4, **caractérisé en ce que** ledit élément de balise (TAG) est réalisé sous la forme d'un nombre entier, de préférence d'un mot binaire, qui est attribué de manière univoque à chaque objet qui s'exécute ou chaque objet de données à stocker.

6. Système d'enregistrement d'appel adapté pour être utilisé dans un système de téléphonie ou de télécommunication dans lequel la commande d'un appel est distribuée, **caractérisé en ce que** le système d'enregistrement d'appel comprend un moyen de stockage local et temporaire d'objets de session et/ou de données associées à chaque session exécutée et une base de données externe pour le stockage subséquent et le post-traitement de données associées à chaque session exécutée,
dans lequel le moyen de stockage local et temporaire comprend :
un pointeur en mémoire (PTR) pour le stockage local et temporaire d'objets de session ou de données, dans des enregistrements qui sont associés à chaque session exécutée, ledit pointeur (PTR) étant combiné à un élément de balise (TAG) qui identifie de manière univoque les données stockées localement ;
une liste de balises qui a été fournie par une base de données locale et qui y est stockée ; et
une fonction objet de visualisation d'enregistrement, adaptée, grâce à l'usage de ladite liste de balises, pour appeler sélectivement des données afin qu'elles soient ensuite stockées dans ladite base de données externe.

7. Système selon la revendication 6, **caractérisé en ce que** la session utilise un enregistrement de session (SR) et un enregistrement de transaction (TR) pour stocker des pointeurs (PTR) et des balises (TAG) d'objets et de données, respectivement, dans ladite session, lesdits enregistrements permettant d'extraire des objets ou données sélectionnés en les référençant à l'aide de leur élément de balise (TAG) respectif.

8. Système selon la revendication 7, **caractérisé par** un enregistrement de matière de trafic adapté pour stocker des objets d'un appel qui s'exécutent.
